# EUROPEAN PATENT SPECIFICATION

(11) **EP 1 879 418 B1**
(45) Date of publication and mention of the grant of the patent: **21.09.2011**
(21) Application number: 07013120.6
(22) Date of filing: 04.07.2007
(51) Int. Cl.: H04W 48/12

(54) **Method of controlling mobile communication device for providing always-on services**
Verfahren zur Steuerung einer mobilen Kommunikationsvorrichtung zur Bereitstellung von 24-Stunden-Diensten
Procédé pour le contrôle d'un dispositif de communication mobile pour la fourniture de services permanents

(30) Priority: 14.07.2006 KR 20060066426
(43) Date of publication of application: 16.01.2008
(73) Proprietor: LG Electronics Inc., Seoul 150-721 (KR)
(72) Inventor: Lim, Hee Kyung, Gwanak-gu Seoul 151-053 (KR); Jung, Eun Hyek, Yeongdeungpo-gu Seoul 150-104 (KR); Lee, Yong Uk 219-24 LG Electronics Inc., Seoul 153-023 (KR)
(74) Representative: Katérle, Axel

(56) References cited:
- EP-A- 1 463 366
- EP-A- 1 677 490
- WO-A-2004/043098
- WO-A2-02/21861
- US-A1- 2005 153 691

## Description

### BACKGROUND OF THE INVENTION

### 1. Field of the Invention

The present invention relates to a method of controlling a mobile communication device, which can enable a mobile communication device to use always-on services even in a newly available Public Land Mobile Network (PLMN) by updating a Visitor Public Land Mobile Network (VPLMN) list present in the mobile communication device.

### 2. Description of the Related Art

Packet Data Protocol (PDP) is a network protocol used by an external packet data network for communication with a General Packet Radio Service (GPRS) network. PDP context represents the logical association between a mobile station such as a GPRS mobile communication device and a public data network (PDN) and defines various elements regarding routing, Quality of Service (QoS), security and accounting.

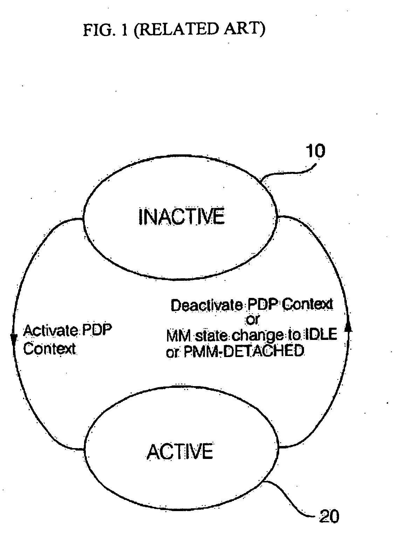

FIG. 1 explains the variation of the state of PDP context. Referring to FIG. 1, PDP context may be placed in an inactive state 10 or an active state 20. When the PDP context is in the active state 20, packet data can be transmitted. The context of the PDP context may be switched from the inactive state 10 to the active state 20 in response to an activation request. If an inactivation request is received or a mobility management (MM) state is switched to an idle state or a packet mobility management (PMM)-detached state when the PDP context is in the active state 20, the PDP context may be placed back in the inactive state 10.

However, Hutchison3G (H3G) service networks require PDP context to remain active all the time so as to enable always-on services. More specifically, in order to enable Packet Switched (PS) paging, Over-The-Air (OTA), Wireless Application Protocol (WAP) Push, and Firmware Over The Air (FOTA) services in mobile communication devices, H3G service networks such as Home Public Land Mobile Networks (HPLMNs) must maintain PDP context to be active. In order for a mobile communication device to be seamlessly provided with always-on services even when moving from one region to another, the mobile communication device must include a list of a plurality of pieces of information respectively corresponding to a plurality of H3G Public Land Mobile Networks (PLMNs) for different regions or different countries, i.e., a Visitor Public Land Mobile Network (VPLMN) list.

A VPLMN list of a mobile communication device, including information regarding one or more PLMNs that can provide always-on services, is generally finalized at the time of release and distribution of the mobile communication device. Once a mobile communication device is released into the market, the mobile communication device may not be able to learn information regarding networks that are newly added after the release of the mobile communication device and thus may not be able to be provided with always-on services in such newly added networks. In other words, since a VPLMN list of a mobile communication device is finalized based upon agreement with mobile communication operators at the time of development of the mobile communication device, it is difficult to reflect, in the VPLMN list, information regarding new networks provided by existing or new mobile communication operators in real time.

US 2005/0153691 A1 discloses a technique of providing a mobile data device in a wireless system with information about networks to connect to. The mobile data device has a preferred roaming list, which is a list of available networks including capabilities thereof, such as an always-on service capability. The preferred roaming list and the information about network capabilities enables the device to perform network selection. For example, in case a preference criterion in the preferred roaming list is whether the system supports an always-on feature and in case the device is an always-on device, it prefers selecting a network that supports an always-on feature.

EP 1 463 366 A2 discloses a technique for influencing visited network selection by roaming mobile units. Roaming of a mobile unit in a given roaming environment is detected. The home network system obtains a list comprising an order of preference for networks available in the roaming environment and sends a corresponding output to influence the roaming mobile unit's choice of network. In particular, once a particular mobile unit has been detected entering a specific environment, a preference unit associated with the home network sends a signal including the preference list to the handset for updating the SIM thereof with the list of preferred networks for the country in which the handset is roaming.

### SUMMARY OF THE INVENTION

The present invention provides a technique of controlling a mobile communication device according to the appended claims, which can enable a mobile communication device to use always-on services even in a newly available Public Land Mobile Network (PLMN) by updating a Visitor Public Land Mobile Network (VPLMN) list present in the mobile communication device.

### BRIEF DESCRIPTION OF THE DRAWINGS

The above and other features and advantages of the present invention will become more apparent by describing in detail preferred embodiments thereof with reference to the attached drawings in which:
FIG. 1 explains the variation of the state of Packet Data Protocol (PDP) context;
FIG. 2 explains a method of controlling a mobile communication device according to an embodiment of the present invention;
FIG. 3 illustrates a Visitor Public Land Mobile Network (VPLMN) list;
FIG. 4 is a block diagram for explaining a method of controlling a mobile communication device according to an embodiment of the present invention; and
FIG. 5 is a flowchart illustrating a method of controlling a mobile communication device according to an embodiment of the present invention.

### DETAILED DESCRIPTION OF THE INVENTION

The present invention will hereinafter be described in detail with reference to the accompanying drawings in which exemplary embodiments of the invention are shown.

A method of controlling a mobile communication device according to the present invention may be applied to a network environment which can provide always-on services such as H3G services, but the present invention is not restricted thereto. In other words, the present invention may also be applied to various wireless network environments, other than those set forth herein, as long as the various wireless network environments satisfy a number of conditions according to the present invention.

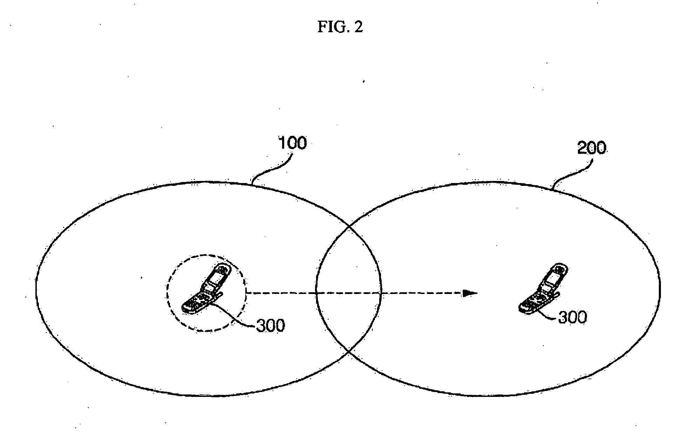

FIG. 2 explains a method of controlling a mobile communication device 300 according to an embodiment of the present invention. Referring to FIG. 2, a first Public Land Mobile Network (PLMN) 100 may be a Home Public land Mobile Network (HPLMN) to which a mobile communication device 300 is subscribed, and a second PLMN 200 may be, for example, a Visitor Public Land Mobile Network (VPLMN) which is provided by a country or a service provider, other than the country or the service provider of the first PLMN 100.

When the mobile communication device 300 moves from the first PLMN 100 to the second PLMN 200 in which always-on services are available, the mobile communication device 300 may not be able to use the always-on services if information regarding the second PLMN 200 is not included in a VPLMN list present in the mobile communication device 300.

In this case, the VPMLN list preset in the mobile communication device 300 may be updated using an Over-The-Air (OTA) message transmitted by the first PLMN 100. Then, the mobile communication device 300 can be continuously provided with always-on services even in the second PLMN 200 by referencing the VPLMN list updated according to the OTA message transmitted by the first PLMN 100.

An OTA service is a service for allowing information regarding a mobile communication device to be modified from a remote place. More specifically, an OTA service allows data of a mobile communication device to be modified by a mobile communication operator either at the request of a user of the mobile communication device or arbitrarily. OTA messages that can be used in an OTA service may be classified into an Over The Air Service Provisioning (OTASP) message, an Over The Air Parameter Administration (OTAPA) message, an Over The Air Software Download (OTASD) message, or an Over The Air Mobile Diagnostics (OTAMD) message. One of the OTASP message, the OTAPA message, the OTASD message, and the OTAMD message may be used as a message for updating a VPLMN list.

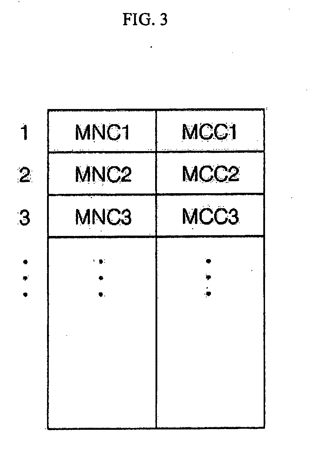

FIG. 3 illustrates a VPLMN list. Referring to FIG. 3, the VLPLMN list includes a plurality of items, each item including a Mobile Country Code (MCC) and a Mobile Network Code (MNC). A mobile communication company can be identified by the combination of an MMC and an MNC included in a VPLMN list. Thus, when a mobile communication device moves from a first service network to a second service network, the mobile communication device still can be provided with always-on services in the second service network by adding an item, including the combination of an MMC and an MNC corresponding to the second service network, to an existing VPLMN list.

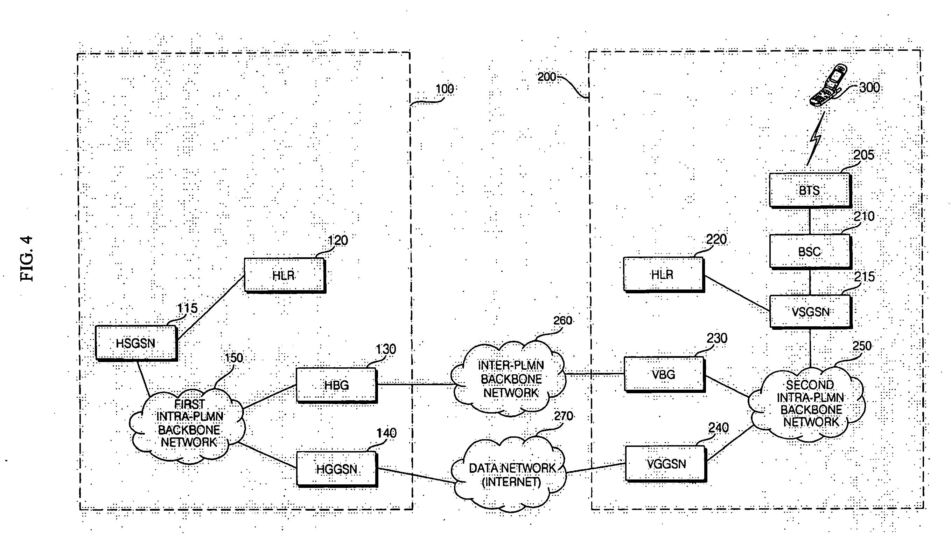

FIG. 4 illustrates a block diagram for explaining a method of controlling a mobile communication device 300 according to an embodiment of the present invention. Referring to FIG. 4, a first PLMN 100 includes a Home Serving General Packet Radio Service (GPRS) Support Node (HSGSN) 115, a Home Border Gateway (HBG) 130, and a Home Gateway GPRS Support Node (HGGSN) 140 which are connected to a first intra-PLMN backbone network 150. Likewise, a second PLMN 200 includes a Visitor Serving GPRS Support Node (VSGSN) 215, a Visitor Border Gateway (230), and a Visitor Gateway GPRS Support Node (VGGSN) 240 which are connected to a second intra-PLMN backbone network 250.

The HSGSN 115 and the VSGSN 215, which are both GPRS support nodes, determine the location of a mobile communication device and performs security and access control functions. In other words, the HSGSN 115 and the VSGSN 215 detect new GPRS mobile communication devices in their service areas, register the detected GPRS mobile communication devices, transmit/receive data packets to/from registered GPRS mobile communication devices, and keep track of the locations of mobile communication devices within their service areas. A Home Location Register (HLR) 120 of the first PLMN 100 and an HRL 220 of the second PLMN 200 include GPRS subscription data and path designation information. The HLR 120 can be accessed via the HSGSN 115, and the HLR 220 can be accessed via the VSGSN 215.

The HGGSN 140 and the VGGSN 240, which are both gateway GPRS support nodes, are interworked with a data network 270, which is an external packet exchange network, and the HBG 130 and the VBG 230 are connected to an inter-PLMN backbone network 260. Each of the first intra-PLMN backbone network 150 and the second intra-PLMN backbone network 250 is an Internet protocol (IP) network that connects a number of GPRS support nodes belonging to the same PLMN. The inter-PLMN backbone network 260 is an IP network that connects a number of GPRS support nodes belonging to different PLMNs.

When the mobile communication device 300 moves from the first PLMN 100 to the second PLMN 200, the mobile communication device 300 receives an OTA message transmitted by the first PLMN 100 and updates a VPLMN list stored therein according to the OTA message. As a result of the update, information regarding the second PLMN 200 may be added to the VPLMN list of the mobile communication device 300 because the OTA message may include an MCC and an MNC regarding the second PLMN 200.

The mobile communication device 300 issues a request for activation of PDP context to the VSGSN 215 via a Base Transceiver station (BTS) 205 and a Base Station Controller (BSC) 210 in the second PLMN 200 by referencing the updated VLPLM list. Then, the VSGSN 215 generates a PDP context request message and transmits the PDP context request message to the VGGSN 240. The VGGSN 240 generates a new entry in a PDP context table, generates a PDP context response message, and transmits the PDP context response message to the VSGSN 215. The VSGSN 215 transmits an active PDP context acceptance message to the mobile communication device 300 via the BSC 205 and the BSC 210.

As a result of the above-mentioned operation, PDP context is activated. Due to the activation of the PDP context, a tunnel is generated, thereby enabling transmission of packet data. Therefore, the mobile communication device 300 can be provided with always-on services in the second PLMN 200.

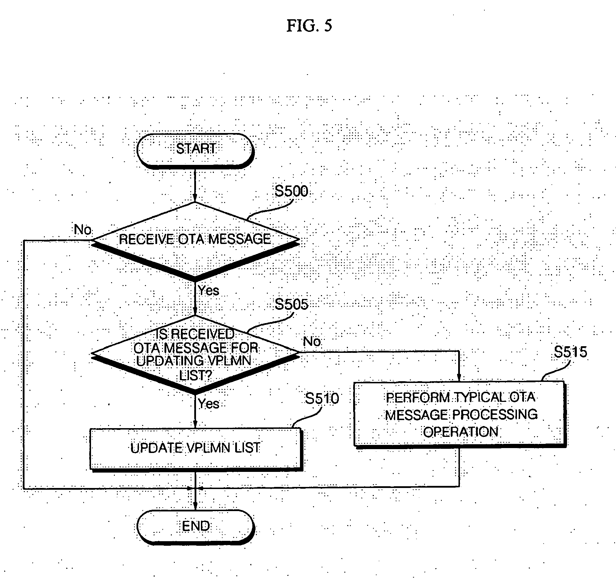

FIG. 5 is a flowchart illustrating a method of controlling a mobile communication device according to an embodiment of the present invention. Specifically, FIG. 5 illustrates an operation of a mobile communication device as part of a method of controlling a mobile communication device according to an embodiment of the present invention.

Referring to FIG. 5, in operation S500, it is determined whether an OTA message has been received from a base station. In operation S505, if it is determined in operation S500 that an OTA message has been received from the base station, it is determined whether the received OTA message is for updating a VPLMN list by determining whether a predetermined field of the received OTA message is set to a predefined value. For example, if the received OTA message is an OTASP message and a field OTASP_MSG_TYPE of the received OTA message is set to a predefined value, then it may be determined that the received OTA message is for updating the VPLMN list.

In operation S510, if it is determined in operation S505 that the received OTA message is for updating the VPLMN list, the VPLMN list is updated by adding a new item to the VPLMN list or replacing an existing item in the VPLMN list with the new item. In operation S515, if it is determined in operation S505 that the received OTA message is not for updating the VPLMN list, a typical OTA message processing operation is performed.

In this manner, a VPLMN list present in a mobile communication device can be updated using an OTA message received by the mobile communication device. Since a VPLMN list of a mobile communication device can be updated even after the release and distribution of the mobile communication device, the mobile communication device can always be provided with always-on services through the update of the VPLMN list. In addition, information regarding a PLMN that is no longer available can be removed from a VPLMN list of a mobile communication device using an OTA message.

The present invention can be realized as computer-readable code written on a computer-readable recording medium that can be read by processors such as Mobile Station Modem (MSM) chips. Examples of the computer-readable recording medium include a ROM, a RAM, a flash memory, a CD-ROM, a magnetic tape, a floppy disc, an optical data storage, and a carrier wave (e.g., data transmission through the Internet). The computer-readable recording medium can be distributed over a plurality of computer systems connected to a network so that computer-readable code is written thereto and executed therefrom in a decentralized manner.

As described above, according to the present invention, it is possible to update a VPLMN list of a mobile communication device, including information regarding one or more PLMNs which can provide the mobile communication device with always-on services, by using OTA messages. Therefore, it is possible to update a VPLMN list of a mobile communication device in real time and reflect new mobile communication operator information in the VPLMN list in real time even after the release and distribution of the mobile communication device.

In addition, according to the present invention, it is possible to enable a mobile communication device to continuously use always-on services even when moving to a network provided by a new mobile communication operator. Moreover, it is possible to remove, from a VPLMN list of a mobile communication device, information regarding one or more PLMNs that are no longer available for the mobile communication device due to a contract cancellation or withdrawal, by using OTA messages.

While the present invention has been particularly shown and described with reference to exemplary embodiments thereof, it will be understood by those of ordinary skill in the art that various changes in form and details may be made therein without departing from the present invention as defined by the following claims.

## Claims

1. A method of controlling a mobile communication device which is subscribed to a first Public Land Mobile Network PLMN that provides always-on services, the method **characterized by** the step of:
if the mobile communication device (300) moves from the first PLMN (100) to a second PLMN (200), transmitting, from the first PLMN, a control message for updating a Visitor Public Land Mobile Network VPLMN list present in the mobile communication device by adding an item to the VPLMN list or replacing an item in the VPLMN list according to the control message, the control message comprising Mobile Country Code MCC information and Mobile Network Code MNC information corresponding to the second PLMN (200);
activating PDP context when the mobile communication device issues a request for activation of PDP context to the second PLMN (200) by referencing the updated VLPLM list; and
if the mobile communication device (300) leaves the second PLMN (200),
transmitting a message for removing an item previously added to the VPLMN list during the update from the updated VPLMN list.

2. The method of claim 1, wherein the control message is an Over-The-Air OTA message.

3. A method of controlling a mobile communication device which is subscribed to a first PLMN and can thus use always-on services in the first PLMN, the method comprising:
if the mobile communication device moves from the first PLMN (100) to a second PLMN (200), receiving (S500), from the first PLMN (100), a control message for updating a VPLMN list, the VPLMN list comprising information regarding one or more PLMNs which can provide the always-on services;
updating (S510) the VPLMN list according to the control message by adding an item to the VPLMN list or replacing an item in the VPLMN list;
issuing a request for activation of PDP context to the second PLMN (200) by referencing the updated VLPLM list; and
if a message for removing an item from a VPLMN list is received, removing an item previously added to the VPLMN list during the update from the updated VPLMN list.

4. The method of claim 3, wherein the control message is an OTA message.

5. The method of claim 4, wherein the control message comprises MCC information and MNC information corresponding to the second PLMN (200).

6. A computer-readable code for performing the method according to any one of claims 3 to 5 when the computer-readable code is executed on one or more processors.

7. The computer-readable code of claim 6, stored on a computer readable recording medium.

## Patentansprüche

1. Verfahren zur Steuerung einer mobilen Kommunikationsvorrichtung, die bei einem ersten öffentlichen terrestrischen Mobilnetz PLMN angemeldet ist, das 24-Stunden-Dienste bereitstellt, wobei das Verfahren durch folgenden Schritt **gekennzeichnet** ist:
falls sich die mobile Kommunikationsvorrichtung (300) von dem ersten PLMN (100) zu einem zweiten PLMN (200) bewegt, Übertragen, von dem ersten PLMN, einer Steuernachricht zum Aktualisieren einer in der mobilen Kommunikationsvorrichtung vorhandenen Besucher-VPLMN-Liste, indem entsprechend der Steuernachricht ein Eintrag der VPLMN-Liste hinzugefügt oder ein Eintrag in der VPLMN-Liste ersetzt wird, wobei die Steuernachricht dem zweiten PLMN (200) entsprechende Mobil-Ländercode-Information MCC und Mobilnetzcode-Information MNC umfasst;
Aktivieren eines PDP-Kontexts, wenn die mobile Kommunikationsvorrichtung eine Anforderung zur Aktivierung eines PDP-Kontexts an das zweite PLMN (200) durch Bezugnahme auf die aktualisierte VPLMN-Liste stellt; und
falls die mobile Kommunikationsvorrichtung (300) das zweite PLMN (200) verlässt, Übertragen einer Nachricht zum Entfernen eines vorher bei der Aktualisierung der VPLMN-Liste hinzugefügten Eintrags aus der aktualisierten VPLMN-Liste.

2. Verfahren nach Anspruch 1, wobei die Steuernachricht eine Over-The-Air, kurz OTA, Nachricht ist.

3. Verfahren zur Steuerung einer mobilen Kommunikationsvorrichtung, die bei einem ersten öffentlichen terrestrischen Mobilnetz PLMN angemeldet ist und somit 24-Stunden-Dienste in dem ersten PLMN nutzen kann, wobei das Verfahren umfasst:
falls sich die mobile Kommunikationsvorrichtung von dem ersten PLMN (100) zu einem zweiten PLMN (200) bewegt, Empfangen (S500), von dem ersten PLMN (100),
einer Steuernachricht zum Aktualisieren einer VPLMN-Liste, wobei die VPLMN-Liste Information hinsichtlich eines oder mehrerer PLMNs, das/die die 24-Stunden-Dienste bereitstellen kann/können, enthält;
Aktualisieren (S510) der VPLMN-Liste entsprechend der Steuernachricht, indem ein Eintrag der VPLMN-Liste hinzugefügt oder ein Eintrag in der VPLMN-Liste ersetzt wird;
Stellen einer Anforderung zur Aktivierung eines PDP-Kontexts an das zweite PLMN (200) durch Bezugnahme auf die aktualisierte VPLMN-Liste; und
falls eine Nachricht zum Entfernen eines Eintrags aus einer VPLMN-Liste empfangen wird, Entfernen eines vorher bei der Aktualisierung der VPLMN-Liste hinzugefügten Eintrags aus der aktualisierten VPLMN-Liste.

4. Verfahren nach Anspruch 3, wobei die Steuernachricht eine OTA-Nachricht ist.

5. Verfahren nach Anspruch 4, wobei die Steuernachricht dem zweiten PLMN (200) entsprechende MCC-Information und MNC-Information enthält.

6. Ein computerlesbarer Code zum Ausführen des Verfahrens nach einem der Ansprüche 3 bis 5, wenn der computerlesbare Code an einem oder mehreren Rechnern ausgeführt wird.

7. Der computerlesbare Code nach Anspruch 6, gespeichert auf einem computerlesbaren Aufzeichnungsmedium.

## Revendications

1. Procédé de contrôle d'un dispositif de communication mobile qui est abonné à un premier Réseau Mobile Terrestre Public RMTP qui fournit des services continus, le procédé **caractérisé par** l'étape de :
si le dispositif de communication mobile (300) passe du premier RMTP (100) à un deuxième RMTP (200), transmission, à partir du premier RMTP, d'un message de contrôle pour mettre à jour une liste de Réseaux Mobiles Terrestres Publics Visiteurs RMTPV présente dans le dispositif de communication mobile en ajoutant un élément à la liste de RMTPV ou en remplaçant un élément dans la liste de RMTPV en fonction du message de contrôle, le message de contrôle comprenant une information d'Indicatif de Pays du Mobile IPM et une information de Code de Réseau du Mobile CRM correspondant au deuxième RMTP (200) ;
activation d'un contexte de PDP lorsque le dispositif de communication mobile émet une demande d'activation de contexte PDP vers le deuxième RMTP (200) en faisant référence à la liste de RMTPV mise à jour ; et
si le dispositif de communication mobile (300) quitte le deuxième RMTP (200), transmission d'un message pour supprimer un élément précédemment ajouté à la liste de RMTPV lors de la mise à jour de la liste de RMTPV mise à jour.

2. Procédé selon la revendication 1, dans lequel le message de contrôle est un message par voie hertzienne (OTA).

3. Procédé de contrôle d'un dispositif de communication mobile qui est abonné à un premier RMTP et peut ainsi utiliser des services continus dans le premier RMTP, le procédé comprenant :
si le dispositif de communication mobile passe du premier RMTP (100) à un deuxième RMTP (200), la réception (S500), du premier RMTP (100), d'un message de contrôle pour mettre à jour une liste de RMTPV, la liste de RMTPV comprenant une information relative à un ou plusieurs RMTP qui peuvent fournir les services continus ;
la mise à jour (S510) de la liste de RMTPV en fonction du message de contrôle en ajoutant un élément à la liste de RMTPV ou en remplaçant un élément dans la liste de RMTPV ;
l'émission d'une demande d'activation d'un contexte PDP vers le deuxième RMTP (200) en faisant référence à la liste de RMTPV mise à jour ; et
si un message pour supprimer un élément d'une liste de RMTPV est reçu, la suppression d'un élément précédemment ajouté à la liste de RMTPV lors de la mise à jour de la liste de RMTPV mise à jour.

4. Procédé selon la revendication 3, dans lequel le message de contrôle est un message OTA.

5. Procédé selon la revendication 4, dans lequel le message de contrôle comprend une information IPM et une information CRM correspondant au deuxième RMTP (200).

6. Code lisible par un ordinateur pour mettre en oeuvre le procédé selon l'une quelconque des revendications 3 à 5, lorsque le code lisible par un ordinateur est exécuté sur un ou plusieurs processeurs.

7. Code lisible par un ordinateur selon la revendication 6, stocké sur un support d'enregistrement lisible par un ordinateur.
